# EUROPEAN PATENT SPECIFICATION

(11) **EP 3 823 213 B1**
(45) Date of publication and mention of the grant of the patent: **28.01.2026**
(21) Application number: 19841404.7
(22) Date of filing: 24.07.2019
(51) Int. Cl.: H04L 41/0873, H04L 41/0816, H04L 41/0213

(54) **NETWORK MANAGEMENT METHOD AND APPARATUS**
VERFAHREN UND VORRICHTUNG ZUR NETZWERKVERWALTUNG
PROCÉDÉ ET APPAREIL DE GESTION DE RÉSEAU

(30) Priority: 27.07.2018 CN 201810853147
(43) Date of publication of application: 19.05.2021
(73) Proprietor: HUAWEI TECHNOLOGIES CO., LTD., Shenzhen, Guangdong 518129 (CN)
(72) Inventor: ZHANG, Taibo, Shenzhen, Guangdong 518129 (CN)
(74) Representative: Maiwald GmbH
(86) International application number: PCT/CN2019/097562
(87) International publication number: WO 2020/020249

(56) References cited:
- WO-A1-2010/097019
- WO-A1-2012/075862
- CN-A- 102 148 817
- CN-A- 105 979 321
- CN-A- 105 979 321
- US-A1- 2015 019 991
- ENNS R ET AL: "Network Configuration Protocol (NETCONF); rfc6241.txt", NETWORK CONFIGURATION PROTOCOL (NETCONF); RFC6241.TXT, INTERNET ENGINEERING TASK FORCE, IETF; STANDARD, INTERNET SOCIETY (ISOC) 4, RUE DES FALAISES CH- 1205 GENEVA, SWITZERLAND, 30 June 2011 (2011-06-30), pages 1 - 113, XP015076061
- LENGYEL ERICSSON M BJORKLUND TAIL-F SYSTEMS B: "Partial Lock Remote Procedure Call (RPC) for NETCONF; rfc5717.txt", PARTIAL LOCK REMOTE PROCEDURE CALL (RPC) FOR NETCONF; RFC5717.TXT, INTERNET ENGINEERING TASK FORCE, IETF; STANDARD, INTERNET SOCIETY (ISOC) 4, RUE DES FALAISES CH- 1205 GENEVA, SWITZERLAND, 21 December 2009 (2009-12-21), pages 1 - 23, XP015068123

## Description

This application claims priority to Chinese Patent Application No. 201810853147.3, filed with the Chinese Patent Office on July 27, 2018 and entitled "NETWORK MANAGEMENT METHOD AND APPARATUS".

### TECHNICAL FIELD

This application relates to the communications field, and in particular, to a network management method and an apparatus.

### BACKGROUND

The network configuration protocol (network configuration, NETCONF) is a protocol that can be used to manage a network device. A network management system can use NETCONF to operate (modify or lock) a configuration data set of a network device, so that the network management system can query, add, modify, or delete a configuration of the network device. Common configuration data sets of a network device include a running (running) data set and a candidate (candidate) data set. The running data set includes a set of configuration parameters being run on the network device, and each running data set can be locked by only one network device by using a NETCONF session. When the session is disconnected, the running data set is automatically released. The candidate data set includes a set of configuration parameters to be run on the network device. The candidate data set may be understood as a cache of configuration data, and does not take effect immediately. A manager may perform a commit operation on a proper occasion, to execute all configurations in the data set at the same time, so that the configurations become configurations that are being run. Each candidate data set can be locked by only one client by using a NETCONF session. When the session is disconnected, the candidate data set is automatically released.
WO2010/097019A1 describes a method and apparatus for monitoring locking mechanism. The method includes: obtaining data locking information of a network management protocol executing a locking operation, and recording the data locking information of the network management protocol; saving the data locking information of the network management protocol. It is described that network administrators can avoid blindly searching for the reasons for configuration failure, thereby improving the accuracy of resolving problems and work efficiency.

Currently, a configuration data set may be locked through a lock (lock) operation, so as to exclusively operate the configuration data set. Once the configuration data set is locked, another NETCONF client cannot operate the configuration data set (use the configuration data set) until the data set is released. For example, when a client A and a client B operate a same configuration data set by using NETCONF, if the client A locks the configuration data set, the client B cannot modify or lock the configuration data set. In this case, the client B may have two options: (1) forcibly disconnecting (KILL) a session of the client A for the configuration data set; and (2) waiting until the configuration data set is unlocked. Disadvantages of the two options are as follows: (1) The session of the client A is forcibly disconnected by the client B, and consequently, service processing of the client A is affected. (2) The client B may wait for a long time, and consequently, service processing of the client B is affected.

### SUMMARY

Embodiments of this application provide a network management method and an apparatus, to reduce impact on a service of a user that is caused when a conflict occurs between operations performed by a plurality of devices on a configuration data set.

Appended claim 1 defines a network management method. Appended claim 4 defines a network management method. Appended claim 7 defines a first device. Appended claim 10 defines a second device. Appended claim 13 defines a network management system. The invention and its scope of protection is defined by these independent claims.

### BRIEF DESCRIPTION OF DRAWINGS

FIG. 1 is a schematic diagram of a communication architecture applicable to a network management method according to an embodiment of this application;
FIG. 2 is a schematic diagram of a network management method according to an embodiment of this application;
FIG. 3 is a schematic diagram of an internal structure of a first device according to an embodiment of this application;
FIG. 4 is a schematic diagram of an internal structure of another first device according to an embodiment of this application;
FIG. 5 is a schematic diagram of an internal structure of a second device according to an embodiment of this application;
FIG. 6 is a schematic diagram of an internal structure of another second device according to an embodiment of this application;
FIG. 7 is a schematic diagram of an internal structure of a third device according to an embodiment of this application;
FIG. 8 is a schematic diagram of an internal structure of another third device according to an embodiment of this application; and
FIG. 9 is a schematic diagram of a network management system according to an embodiment of this application.

### DESCRIPTION OF EMBODIMENTS

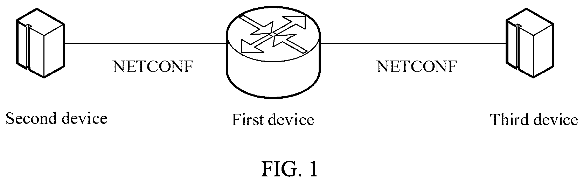

Embodiments of this application provide a network management method and an apparatus, used in a scenario in which a conflict occurs when a plurality of devices operate a same configuration data set according to NETCONF. Operating the configuration data set includes modifying or locking the configuration data set. Specifically, modifying the configuration data set includes deleting, adding, or replacing a configuration parameter in the configuration data set. For example, if a configuration data set 1 includes configuration parameters a, b, and c, modifying the configuration data set 1 may be adding a new configuration parameter d to the configuration data set 1, deleting the configuration parameter a from the configuration data set 1, or replacing the configuration parameter b in the configuration data set 1 with a configuration parameter e. For example, as shown in FIG. 1, the network management method may be used in a scenario in which a second device and a third device operate a configuration data set (for example, a candidate data set) of a first device according to NETCONF.

FIG. 1 is a schematic architectural diagram of a system applicable to a network management method according to an embodiment of this application. The system includes a first device, a second device, and a third device. The first device may be configured to receive a first request message and a second request message that are respectively sent by the second device and the third device according to NETCONF. The first request message is used to lock a configuration data set of the first device. The first device may lock the configuration data set based on the first request message. The second request message is used to request to modify or lock the configuration data set after the second device locks the configuration data set of the first device. Consequently, the lock operation performed by the second device on the configuration data set conflicts with the modify or lock operation performed by the third device on the configuration data set. In this case, the first device may send a first response message to the second device, where the first response message is used to notify that the third device requests to modify or lock the configuration data set. In this way, the second device may learn that the configuration data set locked by the second device encounters a conflict and needs to be released as soon as possible, so that the third device can normally use the configuration data set.

The first device may be a network device, for example, a router, a switch, or a firewall; or may be a network operating system (a software platform) installed on a virtual machine, for example, a virtual router, a virtual switch, or a virtual firewall. This is not limited in this application.

The second device and the third device can configure and manage the first device. The second device and the third device each may be a network device, for example, a client; or may be a network operating system installed on a virtual machine, for example, Windows, MAC, or Linux.

The following describes the technical solutions in the embodiments of this application with reference to the accompanying drawings in the embodiments of this application. In the descriptions of this application, unless otherwise specified, "a plurality of" means two or more than two. In addition, to clearly describe the technical solutions in the embodiments of this application, terms such as "first" and "second" are used in the embodiments of this application to distinguish between same items or similar items that have basically same functions and purposes. A person skilled in the art may understand that the terms such as "first" and "second" do not limit a quantity or an execution sequence, and the terms such as "first" and "second" do not indicate a definite difference.

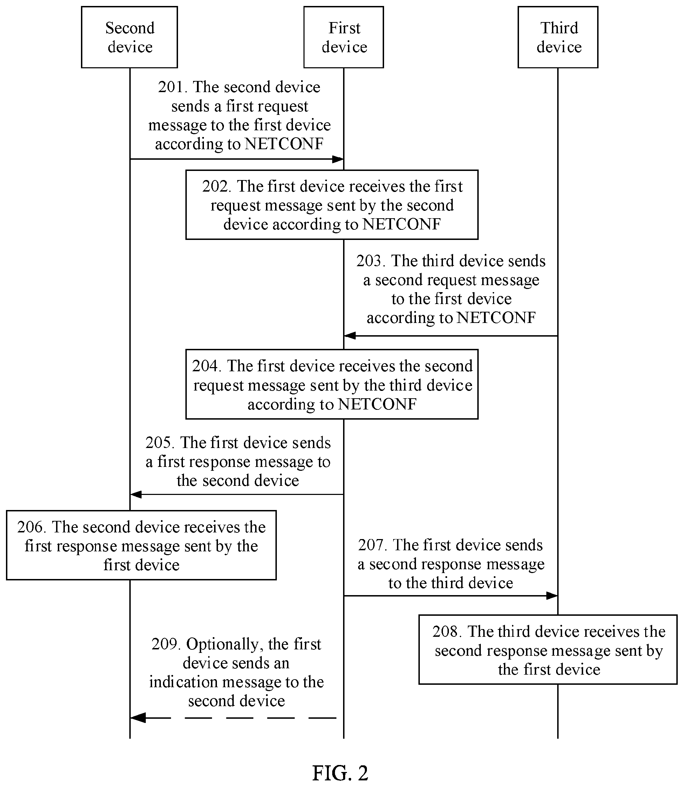

An embodiment of this application provides a network management method. As shown in FIG. 2, a first device in FIG. 2 may be the first device in FIG. 1, and a second device in FIG. 2 may be the second device in FIG. 1. The method includes the following steps.

201. The second device sends a first request message to the first device according to NETCONF, where the first request message is used to lock a configuration data set of the first device.

The second device may encapsulate the first request message into a NETCONF packet.

The configuration data set of the first device may be but is not limited to a running data set or a candidate data set. Data in the configuration data set may include static data and status data. The static data includes, for example, a static IP address and a virtual local area network (virtual local area network, VLAN) node. The status data includes, for example, statistics about quantities of received data packets, discarded data packets, and forwarded data packets.

202. The first device receives the first request message sent by the second device according to NETCONF, and locks the configuration data set of the first device based on the first request message.

For example, when the first request message is used to lock a running data set of the first device, the first device may set the running data set to a locked state, and send a response message to the second device, to notify, by using the response message, that the running data set of the first device is locked by the second device.

203. A third device sends a second request message to the first device according to NETCONF, where the second request message is used to request to modify or lock the configuration data set of the first device.

The third device may encapsulate the second request message into a NETCONF packet.

204. The first device receives the second request message sent by the third device according to NETCONF, where the second request message is used to request to modify or lock the configuration data set.

Because the second device has locked the configuration data set of the first device, the third device cannot modify or lock the configuration data set of the first device. In this case, the first device determines that the lock operation performed by the second device on the configuration data set conflicts with the modify or lock operation performed by the third device on the configuration data set.

205. The first device sends a first response message to the second device, where the first response message is used to notify that the third device requests to modify or lock the configuration data set.

In a possible design, the first response message may include an identifier of the configuration data set that encounters the conflict. In this way, the second device may learn, by using the first response message, that the configuration data set locked by the second device encounters the conflict and needs to be released as soon as possible, so that another device (the third device) can normally use the configuration data set.

Further, the first response message may include information about the third device. The information about the third device may include an IP address of the third device. Alternatively, the information about the third device may include a user identity (a user name) of the third device. Alternatively, the information about the third device may include an IP address of the third device and a user identity of the third device. If the user name relates to security, the user name may be anonymized. For example, the user name is replaced with "*". In this way, the second device may learn, by using the first response message, that the third device needs to modify or lock the configuration data set locked by the second device, and the configuration data set needs to be released as soon as possible, so that the third device can normally use the configuration data set.

In a possible design, the first device may encapsulate the first response message into a NETCONF packet in an extensible markup language (extensible markup language, XML) encoding scheme (for details, refer to a related regulation in RFC 6241 of NETCONF). For example, a structure of the NETCONF packet may be as follows (where a symbol "--»" represents a comment on a corresponding packet):

```
<notification
          --» indicating a notification node;
              xmlns="um:ietf:params :xml:ns :netconf:notification: 1.0">
              --» indicating namespace (Namespace) of the notification node;
               <eventTime>2007-07-08T00:04:00Z</eventTime>
              --» indicating a time of the notification;
               <event >
              --» starting to carry an event node;
                 <eventClass>config</eventClass>
                 --» indicating a type of the event node,
that is, a notification event of a config type;
                 <reportingEntity>
                 --» indicating a reporting entity of the notification event;
                     <card>runningDataBase</card>
                     --» indicating a key node in the reporting
entity node, which represents notification of
                     runningDataBase;
                     <userInfo>
                   --» indicating a leaf node in the reporting
entity node, where the information herein can be
                   customized;
                      <userName>netconf123</userName>
                      --» indicating a subnode of a userInfo
node, which includes the user identity of the third
                      device;
                       <userIpAddr> 192. 168. 12.98</userIpAddr>
                      --» indicating a subnode of the userInfo
node, which includes the IP address of the third
                      device;
                      <sessionID>436</sessionID>
                      --» indicating a subnode of the userInfo node,
which includes a session ID of the third device;
                     </userInfo>
                   --» end character of the userInfo node;
                 </reportingEntity>
                 --» end character of the reportingEntity node;
                 <severity>minor</severity>
               --» indicating a severity level of the notification time;
              </event>
            --» end character of the event node;
          </notification>
          --» end character of the notification node.
```

206. The second device receives the first response message sent by the first device.

For a format of the first response message, refer to related descriptions in step 205.

The second device may learn, by using the first response message, that another device (the third device) needs to modify or lock the configuration data set locked by the second device, and the configuration data set needs to be released as soon as possible, so that the third device can normally use the configuration data set.

Optionally, after the second device releases the locked data set, the second device may send a notification message to the third device, where the notification message is used to indicate that the configuration data set is released. This can avoid unnecessary waiting of the third device.

In addition, if a link between the second device and the first device is disconnected without reason, it is very likely that the third device forcibly disconnects the link. The second device may negotiate with the third device by using a corresponding message, to ensure that a service between the second device and the first device can be restored and continued.

207. The first device sends a second response message to the third device, where the second response message includes information about the second device.

The information about the second device may include an IP address of the second device. Alternatively, the information about the second device may include a user identity of the second device. Alternatively, the information about the second device may include an IP address of the second device and a user identity of the second device. If the user identity relates to security, the user identity may be anonymized. For example, the user identity is replaced with "*".

In a possible design, step 205 and step 206 may not be performed. In other words, step 207 may be directly performed after step 204. Alternatively, step 205 and step 206 may be performed after step 207 and step 208. An execution sequence of the steps is not specifically limited in this embodiment.

In a possible design, the first device may encapsulate the second response message into a NETCONF packet in an XML encoding scheme. For example, a structure of the NETCONF packet may be as follows (where a symbol "--»" represents a comment on a corresponding packet):

```
          <?xml version="1.0" encoding="utf-8"?>
          --» encapsulation format of a header of the NETCONF packet;
          <rpc-reply xmlns="urn:ietf:params:xml:ns:netconfbase:1.0" message-id="7">
          --» namespace of a replay packet;
           <rpc-error>
          --» RPC-ERROR node;
          <error-type>application</error-type>
          --» error-type in RPC-ERROR;
          <error-tag>in-use</error-tag>
          --» error-tag in RPC-ERROR;
          <error-severity>error</error-severity>
          --» error-severity in RPC-ERROR;
               <error-path xmlns:xnt="http://www.huawei.com/netconf/vrp/huawei-
               acl">/xnt:acl/xnt:aclGroups/xnt:aclGroup
/xnt:aclRuleBas4s/xnt:aclRuleBas4</error-path>
           --» error-path in RPC-ERROR;
              <error-message xml:lang="en">The
configuration is locked by other user. [Session ID =
              42736]</error-message>
           --» error-message in RPC-ERROR;
           <error-info>
           --» error-info in RPC-ERROR;
           <session-id>42736</session-id>
           --» information in error-info, including a session ID of the second device;
            <locked-user-name>root123</locked-user-name>
             --» user identity of the second device;
            <locked-user-ip>192.168.12.100</locked-user-ip>
             --» IP address of the second device;
            </error-info>
             --» end character;
            </rpc-error>
             --» end character;
           </rpc-reply>
           --» end character.
```

208. The third device receives the second response message sent by the first device, where the second response message includes the information about the second device that locks the configuration data set.

For a format of the second response message, refer to related descriptions in step 207.

Optionally, the third device may send a third request message to the second device, where the third request message is used to request the second device to release the configuration data set, so that the third device can normally use the configuration data set.

209. Optionally, when the first device determines that the third device forcibly disconnects a session between the second device and the first device, the first device sends an indication message to the second device, where the indication message is used to indicate that the third device forcibly disconnects the session between the second device and the first device.

The second device receives the indication message. The second device may negotiate with the third device by using a corresponding message, to ensure that a service of the second device can be continued.

It should be noted that there is no inevitable execution sequence among step 201 to step 209. An execution sequence among the steps is not specifically limited in this embodiment.

Based on the foregoing solution, when a configuration data set use conflict occurs, the first device may notify, by using the first response message, the second device locking the configuration data set that another device (the third device) needs to use the configuration data set. In this way, the second device may release the locked configuration data set as soon as possible, thereby reducing impact of the configuration data set use conflict on a service of the another device.

The first response message may carry the information about the third device. Further, after the second device releases the locked data set, the second device may send the notification message to the third device based on the information about the third device, where the notification message is used to indicate that the configuration data set is released. This can avoid unnecessary waiting of the third device.

In addition, the first device may send the second response message to the third device, and the second response message includes the information about the second device, so that the third device may send the third request message to the second device, where the third request message is used to request the second device to release the configuration data set. In this way, if a conflict occurs when the second device and the third device use the configuration data set, the third device may actively negotiate with the second device, so that the second device may release the locked configuration data set as soon as possible, and the third device may normally use the configuration data set as soon as possible. This can reduce impact of the configuration data set use conflict on a service of the third device.

The foregoing mainly describes the solutions in the embodiments of this application from a perspective of the first device, the second device, and the third device. It may be understood that, to implement the foregoing functions, the first device, the second device, and the third device include corresponding hardware structures and/or software modules for performing the functions. A person skilled in the art should be easily aware that, in combination with the algorithm steps described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the first device, the second device, and the third device may be divided into function modules based on the foregoing method example. For example, each function module may be obtained through division based on each corresponding function, or two or more functions may be integrated into one processing module. The integrated module may be implemented in a form of hardware, or may be implemented in a form of a software function module. It should be noted that, in the embodiments of this application, division into the modules is an example, and is merely logical function division. In actual implementation, another division manner may be used.

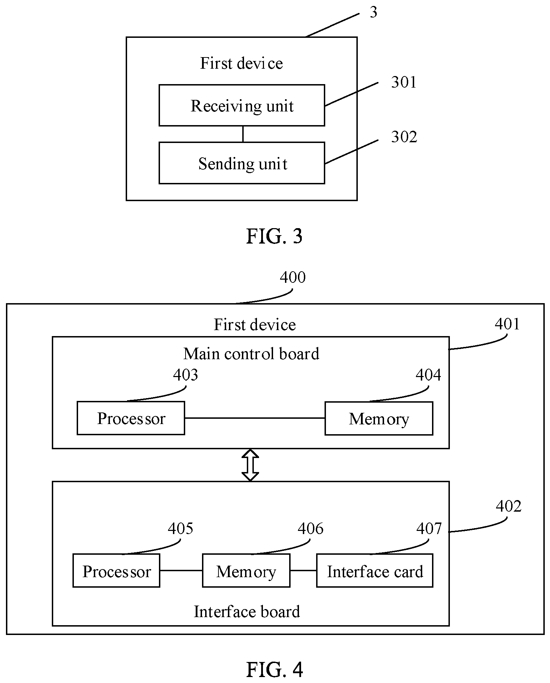

When each function module is obtained through division based on each corresponding function, FIG. 3 is a possible schematic structural diagram of a first device 3 related to the foregoing embodiments. The first device includes a receiving unit 301 and a sending unit 302. In this embodiment of this application, the receiving unit 301 may be configured to: receive a first request message sent by a second device according to NETCONF, and lock a configuration data set of the first device based on the first request message; and receive a second request message sent by a third device according to NETCONF, where the second request message is used to request to modify or lock the configuration data set. The sending unit 302 is configured to send a first response message to the second device, where the first response message is used to notify that the third device requests to modify or lock the configuration data set. The first device in FIG. 3 may be the first device in FIG. 1 and FIG. 2, and may implement a function of the first device in FIG. 2. The receiving unit 301 may be configured to support the first device in performing the processes 202 and 204 in FIG. 2. The sending unit 302 is configured to support the first device in performing the processes 205, 207, and 209 in FIG. 2.

Referring to FIG. 4, an embodiment of this application provides a first device 400. The first device 400 may be a router, a switch, a firewall, or another network device having a forwarding function. The first device 400 can implement functions of the first device in the foregoing method embodiment. The first device 400 includes a main control board 401 and an interface board 402. The main control board 401 includes a processor 403 and a memory 404. The interface board 402 includes a processor 405, a memory 406, and an interface card 407. The main control board 401 is coupled to the interface board 402.

The processor 403 or the processor 405 may be a central processing unit (central processing unit, CPU), a micro-processing unit, a general-purpose processing unit, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof.

The memory 404 or the memory 406 may be a read-only memory (read-only memory, ROM) or another type of static storage device capable of storing static information and an instruction, or a random access memory (random access memory, RAM) or another type of dynamic storage device capable of storing information and an instruction, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blue-ray disc, or the like), a magnetic disk storage medium or another magnetic storage device, or any other medium capable of carrying or storing expected program code in a form of an instruction or a data structure and capable of being accessed by a computer, but is not limited thereto.

The hardware may perform corresponding functions in the foregoing method example. For example, the memory 406 may be configured to store program code of the interface board 402, and the processor 405 is configured to invoke the program code in the memory 406 to trigger the interface card 407 to perform various types of information receiving and sending performed by the first device in the foregoing method embodiment. For example, the processor 405 invokes the program code in the memory 406 to trigger the interface card 407 to support the first device 400 in performing the processes 202, 204, 205, 207, and 209 in FIG. 2. The memory 404 may be configured to store program code and data of the main control board 401, and the processor 403 is configured to invoke the program code in the memory 404 to perform processing other than information receiving and sending of the first device in the foregoing method embodiment. For a specific execution process, refer to the detailed descriptions of corresponding steps in the embodiment shown in FIG. 2. Details are not described herein again.

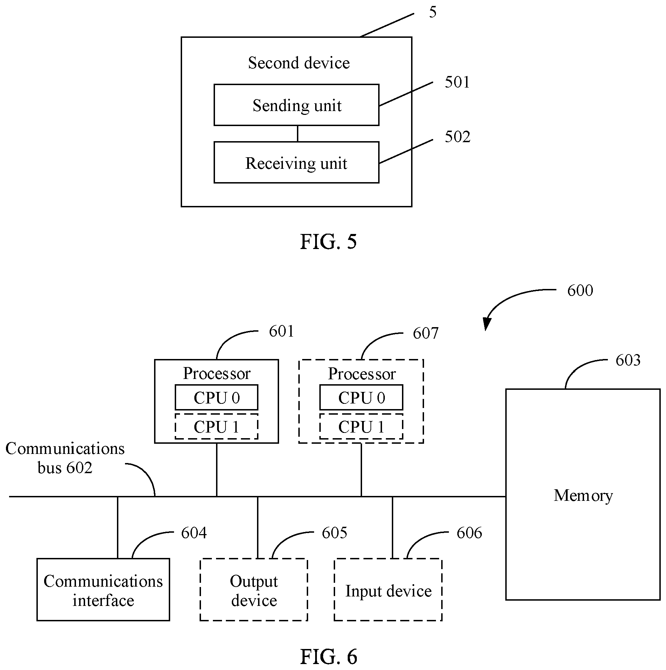

When each function module is obtained through division based on each corresponding function, FIG. 5 is a possible schematic structural diagram of a second device 5 related to the foregoing embodiments. The second device includes a sending unit 501 and a receiving unit 502. In this embodiment of this application, the sending unit 501 is configured to send a first request message to a first device according to NETCONF, where the first request message is used to lock a configuration data set of the first device. The receiving unit 502 is configured to receive a first response message sent by the first device, where the first response message is used to notify that a third device requests to modify or lock the configuration data set. The second device in FIG. 5 may be the second device in FIG. 1 and FIG. 2, and may implement a function of the second device in FIG. 2. The sending unit 501 is configured to support the second device in performing the process 201 in FIG. 2. The receiving unit 502 is configured to support the second device in performing the process 206 in FIG. 2.

In a possible design, the second device may be implemented by using a structure (an apparatus or a system) in FIG. 6.

FIG. 6 is a schematic diagram of a structure according to an embodiment of this application. The structure 600 includes at least one processor 601, a communications bus 602, a memory 603, and at least one communications interface 604.

The processor 601 may be a CPU, a micro-processing unit, a general-purpose processing unit, a DSP, an ASIC, an FPGA or another programmable logic device, a transistor logic device, a hardware component, or any combination thereof.

The communications bus 602 may include a path for transmitting information between the foregoing components.

The communications interface 604 uses any apparatus such as a transceiver, and is configured to communicate with another device or a communications network such as the Ethernet, a radio access network (radio access network, RAN), or a wireless local area network (wireless local area network, WLAN).

The memory 603 may be a ROM or another type of static storage device capable of storing static information and an instruction, or a RAM or another type of dynamic storage device capable of storing information and an instruction, or may be an EEPROM, a CD-ROM or another compact disc storage, an optical disc storage (including a compressed optical disc, a laser disc, an optical disc, a digital versatile disc, a Blue-ray disc, or the like), a magnetic disk storage medium or another magnetic storage device, or any other medium capable of carrying or storing expected program code in a form of an instruction or a data structure and capable of being accessed by a computer, but is not limited thereto. The memory may exist independently, and is connected to the processing unit through the bus. The memory may be alternatively integrated with the processing unit.

The memory 603 is configured to store application program code for performing the solutions in this application, and the processor 601 controls the execution. The processor 601 is configured to execute the application program code stored in the memory 603, to implement a function in the method in this application.

During specific implementation, in an embodiment, the processor 601 may include one or more CPUs, for example, a CPU 0 and a CPU 1 in FIG. 6.

During specific implementation, in an embodiment, the structure 600 may include a plurality of processors, for example, the processor 601 and a processor 607 in FIG. 6. Each of the processors may be a single-core (single-CPU) processor or a multi-core (multi-CPU) processor. The processor herein may refer to one or more devices, circuits, and/or processing cores configured to process data (for example, a computer program instruction).

During specific implementation, the structure 600 may be a router, a switch, or a device having a structure similar to that in FIG. 6. A type of the structure 600 is not limited in this embodiment of this application.

During specific implementation, in an embodiment, the structure 600 may further include an output device 605 and an input device 606. The output device 605 communicates with the processor 601, and may display information in a plurality of manners. For example, the output device 605 may be a liquid crystal display (liquid crystal display, LCD), a light-emitting diode (light-emitting diode, LED) display device, a cathode ray tube (cathode ray tube, CRT) display device, or a projector (projector). The input device 606 communicates with the processor 601, and may receive an input of a user in a plurality of manners. For example, the input device 606 may be a mouse, a keyboard, a touchscreen device, or a sensing device.

During specific implementation, the structure 600 may be a desktop computer, a portable computer, a network server, a personal digital assistant (personal digital assistant, PDA), a mobile phone, a tablet computer, a wireless terminal device, a communications device, an embedded device, or a device with a structure similar to that in FIG. 6. A type of the structure 600 is not limited in this embodiment of this application.

The second device 600 may implement a function of the second device in the embodiment shown in FIG. 2. The communications interface 604 may be configured to perform various types of information receiving and sending performed by the second device in the foregoing method embodiment. For example, the communications interface 604 is configured to support the second device 600 in performing the processes 201 and 206 in FIG. 2. The processor 601 is configured to support the second device 600 in performing a process other than information receiving and sending performed by the second device in the technology described in this specification. The memory 601 is configured to store program code and data of the second device 600. For a specific execution process, refer to the detailed descriptions of corresponding steps in the embodiment shown in FIG. 2. Details are not described herein again.

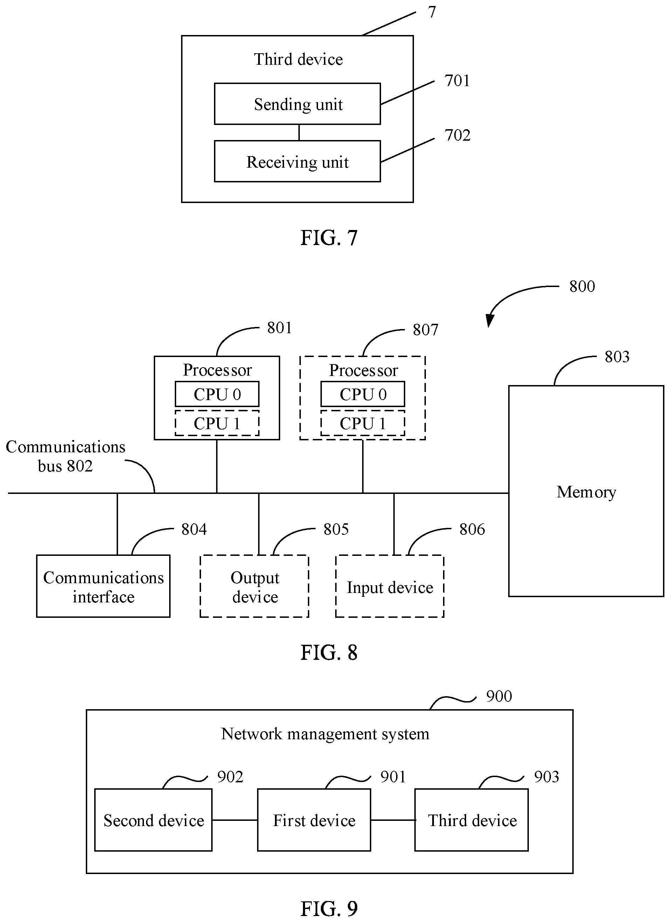

When each function module is obtained through division based on each corresponding function, FIG. 7 is a possible schematic structural diagram of a third device 7 related to the foregoing embodiments. The third device includes a sending unit 701 and a receiving unit 702. In this embodiment of this application, the sending unit 701 is configured to send a second request message to a first device according to NETCONF, where the second request message is used to request to modify or lock a configuration data set of the first device. The receiving unit 702 is configured to receive a second response message sent by the first device, where the second response message includes information about a second device that locks the configuration data set. The third device in FIG. 7 may be the third device in FIG. 1 and FIG. 2, and may implement a function of the third device in FIG. 2. The sending unit 701 is configured to support the third device in performing the process 203 in FIG. 2. The receiving unit 702 is configured to support the third device in performing the process 208 in FIG. 2.

In a possible design, the third device may be implemented by using a structure (an apparatus or a system) in FIG. 8.

FIG. 8 is a schematic diagram of a structure according to an embodiment of this application. The structure 800 includes at least one processor 801, a communications bus 802, a memory 803, and at least one communications interface 804.

The processor 801 may be a CPU, a micro-processing unit, a general-purpose processing unit, a DSP, an ASIC, an FPGA or another programmable logic device, a transistor logic device, a hardware component, or any combination thereof.

The communications bus 802 may include a path for transmitting information between the foregoing components.

The communications interface 804 uses any apparatus such as a transceiver, and is configured to communicate with another device or a communications network such as the Ethernet, a RAN, or a WLAN.

The memory 803 may be a ROM or another type of static storage device capable of storing static information and an instruction, or a RAM or another type of dynamic storage device capable of storing information and an instruction, or may be an EEPROM, a CD-ROM or another compact disc storage, an optical disc storage (including a compressed optical disc, a laser disc, an optical disc, a digital versatile disc, a Blue-ray disc, or the like), a magnetic disk storage medium or another magnetic storage device, or any other medium capable of carrying or storing expected program code in a form of an instruction or a data structure and capable of being accessed by a computer, but is not limited thereto. The memory may exist independently, and is connected to the processing unit through the bus. The memory may be alternatively integrated with the processing unit.

The memory 803 is configured to store application program code for performing the solutions in this application, and the processor 801 controls the execution. The processor 801 is configured to execute the application program code stored in the memory 803, to implement a function in the method in this application.

During specific implementation, in an embodiment, the processor 801 may include one or more CPUs, for example, a CPU 0 and a CPU 1 in FIG. 8.

During specific implementation, in an embodiment, the structure 800 may include a plurality of processors, for example, the processor 801 and a processor 807 in FIG. 8. Each of the processors may be a single-core processor, or may be a multi-core processor. The processor herein may refer to one or more devices, circuits, and/or processing cores configured to process data (for example, a computer program instruction).

During specific implementation, the structure 800 may be a client or a device having a structure similar to that in FIG. 8. A type of the structure 800 is not limited in this embodiment of this application.

During specific implementation, in an embodiment, the structure 800 may further include an output device 805 and an input device 806. The output device 805 communicates with the processor 801, and may display information in a plurality of manners. For example, the output device 805 may be an LCD, an LED display device, a CRT display device, or a projector. The input device 806 communicates with the processor 801, and may receive an input of a user in a plurality of manners. For example, the input device 806 may be a mouse, a keyboard, a touchscreen device, or a sensing device.

During specific implementation, the structure 800 may be a desktop computer, a portable computer, a network server, a PDA, a mobile phone, a tablet computer, a wireless terminal device, a communications device, an embedded device, or a device having a structure similar to that in FIG. 8. A type of the structure 800 is not limited in this embodiment of this application.

The third device 800 may implement a function of the third device in the embodiment shown in FIG. 2. The communications interface 804 may be configured to perform various types of information receiving and sending performed by the third device in the foregoing method embodiment. For example, the communications interface 804 is configured to support the third device 800 in performing the processes 203 and 208 in FIG. 2. The processor 801 is configured to support the third device 800 in performing a process other than information receiving and sending performed by the third device in the technology described in this specification. The memory 801 is configured to store program code and data of the third device 800. For a specific execution process, refer to the detailed descriptions of corresponding steps in the embodiment shown in FIG. 2. Details are not described herein again.

An embodiment of this application further provides a computer readable storage medium, including an instruction. When the instruction is run on a computer, the computer is enabled to perform the foregoing network management method.

An embodiment of this application further provides a computer program product including an instruction. When the computer program product is run on a computer, the computer is enabled to perform the foregoing network management method.

An embodiment of this application further provides an apparatus, and the apparatus exists in a product form of a chip. The apparatus includes a processor, a memory, and a transceiver component. The transceiver component includes an input/output circuit. The memory is configured to store a computer executable instruction. The processor executes the computer executable instruction stored in the memory, to implement the foregoing network management method. In this case, the method provided in the embodiments of this application may be performed by a chip.

Referring to FIG. 9, an embodiment of this application provides a network management system 900 applicable to a network management method. The system 900 is configured to implement the network management method in the foregoing method embodiment. The system 900 includes a first device 901 and a second device 902. In an example, the system 900 further includes a third device 903.

The first device 901, the second device 902, and the third device 903 may respectively implement functions of the first device, the second device, and the third device in the embodiment shown in FIG. 2. For example, the first device 901 is configured to perform the processes 202, 204, 205, 207, and 209 in FIG. 2, and/or another process performed by the first device in the technology described in this specification. The second device 902 is configured to perform the processes 201 and 206 in FIG. 2, and/or another process performed by the second device in the technology described in this specification. The third device 903 is configured to perform the processes 203 and 208 in FIG. 2, and/or another process performed by the third device in the technology described in this specification.

A person skilled in the art should be aware that in the foregoing one or more examples, functions described in this application may be implemented by hardware, software, firmware, or any combination thereof. When the functions are implemented by software, the functions may be stored in a computer readable medium or transmitted as one or more instructions or code in the computer readable medium. The computer readable medium includes a computer storage medium and a communications medium, where the communications medium includes any medium that enables a computer program to be transmitted from one place to another. The storage medium may be any available medium accessible to a general-purpose or dedicated computer.

The objectives, technical solutions, and beneficial effects of this application are further described in detail in the foregoing specific embodiments. It should be understood that the foregoing descriptions are merely specific embodiments of this application, but are not intended to limit the protection scope of this application. The invention and its scope of protection is defined in the appended claims.

A person skilled in the art should understand that the embodiments of this application may be provided as a method, a system, or a computer program product. Therefore, the embodiments of this application may use a form of hardware only embodiments, software only embodiments, or embodiments with a combination of software and hardware. Moreover, the embodiments of this application may use a form of a computer program product that is implemented on one or more computer-usable storage media (including but not limited to a disk memory, a CD-ROM, an optical memory, and the like) that include computer-usable program code.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processing unit of another programmable data processing device to generate a machine, so that the instructions executed by the computer or the processing unit of the another programmable data processing device generate an apparatus for implementing a specified function in one or more processes in the flowcharts and/or in one or more blocks in the block diagrams.

These computer program instructions may be stored in a computer readable memory that can instruct the computer or the another programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may be alternatively loaded onto a computer or another programmable data processing device, so that a series of operations and steps are performed on the computer or the another programmable device, to generate computer-implemented processing. Therefore, the instructions executed on the computer or the another programmable device provide steps for implementing a specified function in one or more processes in the flowcharts and/or in one or more blocks in the block diagrams.

The invention and its scope of protection is defined in the appended claims.

The foregoing descriptions are merely specific implementations of the present invention, but are not intended to limit the protection scope of the present invention. Therefore, the protection scope of the present invention shall be subject to the protection scope of the claims.

## Claims

1. A network management method, comprising:
receiving (202), by a first device, a first request message sent by a second device according to a network configuration protocol, NETCONF, wherein the first request message is used to lock a configuration data set of the first device;
locking, by the first device, the configuration data set based on the first request message;
receiving (204), by the first device, a second request message sent by a third device according to NETCONF, wherein the second request message is used to request to modify or lock the configuration data set;
determining, by the first device, that the lock operation performed by the second device on the configuration data conflicts with the request from the third device to modify or lock the configuration data set; and
sending (205), by the first device, a first response message to the second device based on the determination that the lock operation performed by the second device on the configuration data set of the first device conflicts with the request from the third device to modify or lock the configuration data set of the first device, wherein the first response message is used to notify the second device that the configuration data set has been locked by the second device and that the third device requests to modify or lock the configuration data set, and wherein the first response message comprises an identifier of the configuration data set that encounters the conflict.

2. The network management method according to claim 1, wherein
the first response message comprises information about the third device, and the information about the third device comprises at least one of an internet protocol IP address of the third device and a user identity of the third device.

3. The network management method according to claim 1 or 2, wherein the method further comprises:
sending, by the first device, a second response message to the third device, wherein the second response message comprises information about the second device, and the information about the second device comprises at least one of an IP address of the second device and a user identity of the second device.

4. A network management method, comprising:
sending (201), by a second device, a first request message to a first device according to a network configuration protocol, NETCONF, wherein the first request message is used to lock a configuration data set of the first device; and
receiving (206), by the second device, a first response message sent by the first device , wherein the first response message is used to notify the second device that the configuration data set has been locked by the second device and that a third device requests to modify or lock the configuration data set, and wherein the first response message comprises an identifier of the configuration data set that encounters the conflict.

5. The network management method according to claim 4, wherein
the first response message comprises information about the third device, and the information about the third device comprises at least one of an internet protocol IP address of the third device and a user identity of the third device.

6. The network management method according to claim 4 or 5, wherein the method further comprises:
after the second device releases the data set of the first device, sending, by the second device, a notification message to the third device, wherein the notification message is used to indicate that the configuration data set is released.

7. A first device, comprising:
a receiving unit (301), configured to receive a first request message sent by a second device according to a network configuration protocol, NETCONF, wherein the first request message is used to lock a configuration data set of the first device;
the receiving unit configured to lock a configuration data set based on the first request message, wherein
the receiving unit (301) is further configured to receive a second request message sent by a third device according to NETCONF, wherein the second request message is used to request to modify or lock the configuration data set and determine that the lock operation performed by the second device on the configuration data conflicts with the request from the third device to modify or lock the configuration data set; and
a sending unit (302), configured to send a first response message to the second device based on the determination that the lock operation performed by the second device on the configuration data set of the first device conflicts with the request from the third device to modify or lock the configuration data set of the first device, wherein the first response message is used to notify the second device that the third device requests to modify or lock the configuration data set, and wherein the first response message comprises an identifier of the configuration data set that encounters the conflict.

8. The first device according to claim 7, wherein
the first response message comprises information about the third device, and the information about the third device comprises at least one of an internet protocol IP address of the third device and a user identity of the third device.

9. The first device according to claim 7 or 8, wherein the sending unit is further configured to:
send a second response message to the third device, wherein the second response message comprises information about the second device, and the information about the second device comprises at least one of an IP address of the second device and a user identity of the second device.

10. A second device, comprising:
a sending unit (501), configured to send a first request message to a first device according to a network configuration protocol, NETCONF, wherein the first request message is used to lock a configuration data set of the first device; and
a receiving unit (502), configured to receive a first response message sent by the first device, wherein the first response message is used to notify the second device that the configuration data set has been locked by the second device and that a third device requests to modify or lock the configuration data set, and wherein the first response message comprises an identifier of the configuration data set that encounters the conflict.

11. The second device according to claim 10, wherein
the first response message comprises information about the third device, and the information about the third device comprises at least one of an internet protocol IP address of the third device and a user identity of the third device.

12. The second device according to claim 10 or 11, wherein the sending unit is further configured to:
after the second device releases the data set of the first device, send a notification message to the third device, wherein the notification message is used to indicate that the configuration data set is released.

13. A network management system, wherein the system comprises the first device according to claims 7 to 9 and the second device according to claims 10 to 12.

## Patentansprüche

1. Netzwerkverwaltungsverfahren, umfassend:
Empfangen (202), durch eine erste Vorrichtung, einer ersten Anforderungsnachricht, die durch eine zweite Vorrichtung gemäß einem Netzwerkkonfigurationsprotokoll, NETCONF, gesendet wird, wobei die erste Anforderungsnachricht dazu verwendet wird, einen Konfigurationsdatensatz der ersten Vorrichtung zu sperren;
Sperren, durch die erste Vorrichtung, des Konfigurationsdatensatzes basierend auf der ersten Anforderungsnachricht;
Empfangen (204), durch die erste Vorrichtung, einer zweiten Anforderungsnachricht, die durch eine dritte Vorrichtung gemäß NETCONF gesendet wird, wobei die zweite Anforderungsnachricht dazu verwendet wird, ein Ändern oder Sperren des Konfigurationsdatensatzes anzufordern;
Bestimmen, durch die erste Vorrichtung, dass der Sperrvorgang, der durch die zweite Vorrichtung an den Konfigurationsdaten durchgeführt wurde, im Widerspruch zu der Anforderung von der dritten Vorrichtung zum Ändern oder Sperren des Konfigurationsdatensatzes steht; und
Senden (205), durch die erste Vorrichtung, einer ersten Antwortnachricht an die zweite Vorrichtung basierend auf der Bestimmung, dass der Sperrvorgang, der durch die zweite Vorrichtung an dem Konfigurationsdatensatz der ersten Vorrichtung durchgeführt wurde, im Widerspruch zu der Anforderung von der dritten Vorrichtung zum Ändern oder Sperren des Konfigurationsdatensatzes der ersten Vorrichtung steht, wobei die erste Antwortnachricht dazu verwendet wird, die zweite Vorrichtung darüber zu benachrichtigen, dass der Konfigurationsdatensatz durch die zweite Vorrichtung gesperrt wurde und dass die dritte Vorrichtung anfordert, den Konfigurationsdatensatz zu ändern oder zu sperren, und wobei die erste Antwortnachricht eine Kennung des Konfigurationsdatensatzes, bei dem der Widerspruch auftritt, umfasst.

2. Netzwerkverwaltungsverfahren nach Anspruch 1, wobei die erste Antwortnachricht Informationen über die dritte Vorrichtung umfasst und die Informationen über die dritte Vorrichtung mindestens eines aus einer Internetprotokoll-Adresse, IP-Adresse, der dritten Vorrichtung und einer Benutzeridentität der dritten Vorrichtung umfassen.

3. Netzwerkverwaltungsverfahren nach Anspruch 1 oder 2, wobei das Verfahren ferner Folgendes umfasst:
Senden, durch die erste Vorrichtung, einer zweiten Antwortnachricht an die dritte Vorrichtung, wobei die zweite Antwortnachricht Informationen über die zweite Vorrichtung umfasst und die Informationen über die zweite Vorrichtung mindestens eines aus einer IP-Adresse der zweiten Vorrichtung und einer Benutzeridentität der zweiten Vorrichtung umfassen.

4. Netzwerkverwaltungsverfahren, umfassend:
Senden (201), durch eine zweite Vorrichtung, einer ersten Anforderungsnachricht an eine erste Vorrichtung gemäß einem Netzwerkkonfigurationsprotokoll, NETCONF, wobei die erste Anforderungsnachricht dazu verwendet wird, einen Konfigurationsdatensatz der ersten Vorrichtung zu sperren; und
Empfangen (206), durch die zweite Vorrichtung, einer ersten Antwortnachricht, die durch die erste Vorrichtung gesendet wird, wobei die erste Antwortnachricht dazu verwendet wird, die zweite Vorrichtung darüber zu benachrichtigen, dass der Konfigurationsdatensatz durch die zweite Vorrichtung gesperrt wurde und dass eine dritte Vorrichtung anfordert, den Konfigurationsdatensatz zu ändern oder zu sperren, und wobei die erste Antwortnachricht eine Kennung des Konfigurationsdatensatzes, bei dem der Widerspruch auftritt, umfasst.

5. Netzwerkverwaltungsverfahren nach Anspruch 4, wobei die erste Antwortnachricht Informationen über die dritte Vorrichtung umfasst und die Informationen über die dritte Vorrichtung mindestens eines aus einer Internetprotokoll-Adresse, IP-Adresse, der dritten Vorrichtung und einer Benutzeridentität der dritten Vorrichtung umfassen.

6. Netzwerkverwaltungsverfahren nach Anspruch 4 oder 5, wobei das Verfahren ferner Folgendes umfasst:
nachdem die zweite Vorrichtung den Datensatz der ersten Vorrichtung freigegeben hat, Senden, durch die zweite Vorrichtung, einer Benachrichtigungsnachricht an die dritte Vorrichtung, wobei die Benachrichtigungsnachricht dazu verwendet wird, anzugeben, dass der Konfigurationsdatensatz freigegeben wurde.

7. Erste Vorrichtung, umfassend:
eine Empfangseinheit (301), die dazu konfiguriert ist, eine erste Anforderungsnachricht zu empfangen, die durch eine zweite Vorrichtung gemäß einem Netzwerkkonfigurationsprotokoll, NETCONF, gesendet wird, wobei die erste Anforderungsnachricht dazu verwendet wird, einen Konfigurationsdatensatz der ersten Vorrichtung zu sperren;
die Empfangseinheit, die dazu konfiguriert ist, einen Konfigurationsdatensatz basierend auf der ersten Anforderungsnachricht zu sperren, wobei
die Empfangseinheit (301) ferner dazu konfiguriert ist, eine zweite Anforderungsnachricht zu empfangen, die durch eine dritte Vorrichtung gemäß NETCONF gesendet wird, wobei die zweite Anforderungsnachricht dazu verwendet wird, ein Ändern oder Sperren des Konfigurationsdatensatzes anzufordern und zu bestimmen, dass der Sperrvorgang, der durch die zweite Vorrichtung an den Konfigurationsdaten durchgeführt wird, im Widerspruch zu der Anforderung von der dritten Vorrichtung zum Ändern oder Sperren des Konfigurationsdatensatzes steht; und
eine Sendeeinheit (302), die dazu konfiguriert ist, eine erste Antwortnachricht an die zweite Vorrichtung basierend auf der Bestimmung, dass der Sperrvorgang, der durch die zweite Vorrichtung an dem Konfigurationsdatensatz der ersten Vorrichtung durchgeführt wurde, im Widerspruch zu der Anforderung von der dritten Vorrichtung zum Ändern oder Sperren des Konfigurationsdatensatzes der ersten Vorrichtung steht, zu senden, wobei die erste Antwortnachricht dazu verwendet wird, die zweite Vorrichtung darüber zu benachrichtigen, dass die dritte Vorrichtung anfordert, den Konfigurationsdatensatz zu ändern oder zu sperren, und wobei die erste Antwortnachricht eine Kennung des Konfigurationsdatensatzes, bei dem der Widerspruch auftritt, umfasst.

8. Erste Vorrichtung nach Anspruch 7, wobei
die erste Antwortnachricht Informationen über die dritte Vorrichtung umfasst und die Informationen über die dritte Vorrichtung mindestens eines aus einer Internetprotokoll-Adresse, IP-Adresse, der dritten Vorrichtung und einer Benutzeridentität der dritten Vorrichtung umfassen.

9. Erste Vorrichtung nach Anspruch 7 oder 8, wobei die Sendeeinheit ferner zu Folgendem konfiguriert ist:
Senden einer zweiten Antwortnachricht an die dritte Vorrichtung, wobei die zweite Antwortnachricht Informationen über die zweite Vorrichtung umfasst und die Informationen über die zweite Vorrichtung mindestens eines aus einer IP-Adresse der zweiten Vorrichtung und einer Benutzeridentität der zweiten Vorrichtung umfassen.

10. Zweite Vorrichtung, umfassend:
eine Sendeeinheit (501), die dazu konfiguriert ist, eine erste Anforderungsnachricht an eine erste Vorrichtung gemäß einem Netzwerkkonfigurationsprotokoll, NETCONF, zu senden, wobei die erste Anforderungsnachricht dazu verwendet wird, einen Konfigurationsdatensatz der ersten Vorrichtung zu sperren; und
eine Empfangseinheit (502), die dazu konfiguriert ist, eine erste Antwortnachricht, die durch die erste Vorrichtung gesendet wird, zu empfangen, wobei die erste Antwortnachricht dazu verwendet wird, die zweite Vorrichtung darüber zu benachrichtigen, dass der Konfigurationsdatensatz durch die zweite Vorrichtung gesperrt wurde und dass eine dritte Vorrichtung anfordert, den Konfigurationsdatensatz zu ändern oder zu sperren, und wobei die erste Antwortnachricht eine Kennung des Konfigurationsdatensatzes, bei dem der Widerspruch auftritt, umfasst.

11. Zweite Vorrichtung nach Anspruch 10, wobei
die erste Antwortnachricht Informationen über die dritte Vorrichtung umfasst und die Informationen über die dritte Vorrichtung mindestens eines aus einer Internetprotokoll-Adresse, IP-Adresse, der dritten Vorrichtung und einer Benutzeridentität der dritten Vorrichtung umfassen.

12. Zweite Vorrichtung nach Anspruch 10 oder 11, wobei die Sendeeinheit ferner zu Folgendem konfiguriert ist:
nachdem die zweite Vorrichtung den Datensatz der ersten Vorrichtung freigegeben hat, Senden einer Benachrichtigungsnachricht an die dritte Vorrichtung, wobei die Benachrichtigungsnachricht dazu verwendet wird, anzugeben, dass der Konfigurationsdatensatz freigegeben wurde.

13. Netzwerkverwaltungssystem, wobei das System die erste Vorrichtung nach Anspruch 7 bis 9 und die zweite Vorrichtung nach Anspruch 10 bis 12 umfasst.

## Revendications

1. Procédé de gestion de réseau, comprenant :
la réception (202), par un premier dispositif, d'un premier message de demande envoyé par un deuxième dispositif selon un protocole de configuration réseau, NETCONF, dans lequel le premier message de demande est utilisé pour verrouiller un ensemble de données de configuration du premier dispositif ;
le verrouillage, par le premier dispositif, de l'ensemble de données de configuration sur la base du premier message de demande ;
la réception (204), par le premier dispositif, d'un second message de demande envoyé par un troisième dispositif selon NETCONF, dans lequel le second message de demande est utilisé pour demander la modification ou le verrouillage de l'ensemble de données de configuration ;
la détermination, par le premier dispositif, que l'opération de verrouillage réalisée par le deuxième dispositif sur les données de configuration est en conflit avec la demande du troisième dispositif de modifier ou de verrouiller l'ensemble de données de configuration ; et
l'envoi (205), par le premier dispositif, d'un premier message de réponse au deuxième dispositif sur la base de la détermination que l'opération de verrouillage réalisée par le deuxième dispositif sur l'ensemble de données de configuration du premier dispositif est en conflit avec la demande du troisième dispositif de modifier ou de verrouiller l'ensemble de données de configuration du premier dispositif, dans lequel le premier message de réponse est utilisé pour notifier au deuxième dispositif que l'ensemble de données de configuration a été verrouillé par le deuxième dispositif et que le troisième dispositif demande de modifier ou de verrouiller l'ensemble de données de configuration, et le premier message de réponse comprend un identifiant de l'ensemble de données de configuration qui rencontre le conflit.

2. Procédé de gestion de réseau selon la revendication 1, dans lequel
le premier message de réponse comprend des informations sur le troisième dispositif, et les informations sur le troisième dispositif comprennent au moins l'une d'une adresse de protocole Internet, IP, du troisième dispositif et d'une identité d'utilisateur du troisième dispositif.

3. Procédé de gestion de réseau selon la revendication 1 ou 2, dans lequel le procédé comprend également :
l'envoi, par le premier dispositif, d'un second message de réponse au troisième dispositif, dans lequel le second message de réponse comprend des informations sur le deuxième dispositif, et les informations sur le deuxième dispositif comprennent au moins l'une d'une adresse IP du deuxième dispositif et d'une identité d'utilisateur du deuxième dispositif.

4. Procédé de gestion de réseau, comprenant :
l'envoi (201), par un deuxième dispositif, d'un premier message de demande à un premier dispositif selon un protocole de configuration réseau, NETCONF, dans lequel le premier message de demande est utilisé pour verrouiller un ensemble de données de configuration du premier dispositif ; et
la réception (206), par le deuxième dispositif, d'un premier message de réponse envoyé par le premier dispositif, dans lequel le premier message de réponse est utilisé pour notifier au deuxième dispositif que l'ensemble de données de configuration a été verrouillé par le deuxième dispositif et qu'un troisième dispositif demande de modifier ou de verrouiller l'ensemble de données de configuration, et dans lequel le premier message de réponse comprend un identifiant de l'ensemble de données de configuration qui rencontre le conflit.

5. Procédé de gestion de réseau selon la revendication 4, dans lequel
le premier message de réponse comprend des informations sur le troisième dispositif, et les informations sur le troisième dispositif comprennent au moins l'une d'une adresse de protocole Internet, IP, du troisième dispositif et d'une identité d'utilisateur du troisième dispositif.

6. Procédé de gestion de réseau selon la revendication 4 ou 5, dans lequel le procédé comprend également :
après que le deuxième dispositif a libéré l'ensemble de données du premier dispositif, l'envoi, par le deuxième dispositif, d'un message de notification au troisième dispositif, dans lequel le message de notification est utilisé pour indiquer que l'ensemble de données de configuration est libéré.

7. Premier dispositif, comprenant :
une unité de réception (301), configurée pour recevoir un premier message de demande envoyé par un deuxième dispositif selon un protocole de configuration réseau, NETCONF, dans lequel le premier message de demande est utilisé pour verrouiller un ensemble de données de configuration du premier dispositif ;
l'unité de réception configurée pour verrouiller un ensemble de données de configuration sur la base du premier message de demande, dans lequel
l'unité de réception (301) est également configurée pour recevoir un second message de demande envoyé par un troisième dispositif selon NETCONF, dans lequel le second message de demande est utilisé pour demander la modification ou le verrouillage de l'ensemble de données de configuration et déterminer que l'opération de verrouillage réalisée par le deuxième dispositif sur les données de configuration est en conflit avec la demande du troisième dispositif de modifier ou de verrouiller l'ensemble de données de configuration ; et
une unité d'envoi (302), configurée pour envoyer un premier message de réponse au deuxième dispositif sur la base de la détermination que l'opération de verrouillage réalisée par le deuxième dispositif sur l'ensemble de données de configuration du premier dispositif est en conflit avec la demande du troisième dispositif de modifier ou de verrouiller l'ensemble de données de configuration du premier dispositif, dans lequel le premier message de réponse est utilisé pour notifier au deuxième dispositif que le troisième dispositif demande de modifier ou de verrouiller l'ensemble de données de configuration, et dans lequel le premier message de réponse comprend un identifiant de l'ensemble de données de configuration qui rencontre le conflit.

8. Premier dispositif selon la revendication 7, dans lequel
le premier message de réponse comprend des informations sur le troisième dispositif, et les informations sur le troisième dispositif comprennent au moins l'une d'une adresse de protocole Internet, IP, du troisième dispositif et d'une identité d'utilisateur du troisième dispositif.

9. Premier dispositif selon la revendication 7 ou 8, dans lequel l'unité d'envoi est également configurée pour :
envoyer un second message de réponse au troisième dispositif, dans lequel le second message de réponse comprend des informations sur le deuxième dispositif, et les informations sur le deuxième dispositif comprennent au moins l'une d'une adresse IP du deuxième dispositif et d'une identité d'utilisateur du deuxième dispositif.

10. Deuxième dispositif comprenant :
une unité d'envoi (501), configurée pour envoyer un premier message de demande à un premier dispositif selon un protocole de configuration réseau, NETCONF, dans lequel le premier message de demande est utilisé pour verrouiller un ensemble de données de configuration du premier dispositif ; et
une unité de réception (502), configurée pour recevoir un premier message de réponse envoyé par le premier dispositif, dans lequel le premier message de réponse est utilisé pour notifier au deuxième dispositif que l'ensemble de données de configuration a été verrouillé par le deuxième dispositif et qu'un troisième dispositif demande de modifier ou de verrouiller l'ensemble de données de configuration, et dans lequel le premier message de réponse comprend un identifiant de l'ensemble de données de configuration qui rencontre le conflit.

11. Deuxième dispositif selon la revendication 10, dans lequel le premier message de réponse comprend des informations sur le troisième dispositif, et les informations sur le troisième dispositif comprennent au moins l'une d'une adresse de protocole Internet, IP, du troisième dispositif et d'une identité d'utilisateur du troisième dispositif.

12. Deuxième dispositif selon la revendication 10 ou 11, dans lequel l'unité d'envoi est également configurée pour :
après que le deuxième dispositif a libéré l'ensemble de données du premier dispositif, envoyer un message de notification au troisième dispositif, dans lequel le message de notification est utilisé pour indiquer que l'ensemble de données de configuration est libéré.

13. Système de gestion de réseau, dans lequel le système comprend le premier dispositif selon les revendications 7 à 9 et le deuxième dispositif selon les revendications 10 à 12.
